**Europäisches Patentamt**

**European Patent Office**

**Office européen des brevets**

(11) Publication number : **0 480 127 B1**

# EUROPEAN PATENT SPECIFICATION

(45) Date of publication of patent specification :
03.11.93 Bulletin 93/44

(51) Int. Cl.⁵ : **A23G 3/30**

(21) Application number : **91109792.1**

(22) Date of filing : **14.06.91**

(54) **A chewing gum which is a substitute for tobacco smoke.**

(30) Priority : **10.10.90 IT 2169490**

(43) Date of publication of application :
**15.04.92 Bulletin 92/16**

(45) Publication of the grant of the patent :
**03.11.93 Bulletin 93/44**

(84) Designated Contracting States :
**AT BE CH DE DK ES FR GB GR IT LI LU NL SE**

(56) References cited :
**EP-A- 0 146 334**
**WO-A-91/09731**
**FR-A- 2 608 156**

(73) Proprietor : **PERFETTI S.p.A.**
**Via XXV Aprile, 7/9**
**I-20020 Lainate (Milan) (IT)**

(72) Inventor : **Perfetti, Giorgio**
**Via XXV Aprile, 7/9**
**I-20020 Lainate (Milan) (IT)**

(74) Representative : **Vannini, Torquato et al**
**JACOBACCI-CASETTA & PERANI S.p.A., Via**
**Visconti di Modrone 7**
**I-20122 Milano (IT)**

Jouve, 18, rue Saint-Denis, 75001 PARIS

## Description

The present invention relates to chewing gum of the type which includes nicotine as a substitute for tobacco smoke.

It is well known that amongst the many substitutes which have been proposed to reduce the need and/or craving to smoke, chewing gums including nicotine have been found to be quite successful for some time. In fact, it now seems to have been established that the assimilation of nicotine from a source other than tobacco can be of real help to a smoker who wishes to give up smoking.

According to the prior art, in order to have the desired effect, chewing gums of the type in question had to contain from 1 to 4 mg of nicotine per 3g strip of gum and had to retain the nicotine so as to release it slowly over no less than 10 minutes during chewing. This slow release is necessary because a more rapid assimilation of the required amount of nicotine could give rise to undesirable side-effects such as, for example, heart palpitations, tachycardia, migraine, irritation of the mouth or throat, etc. The lower limit of 1 g of nicotine was established, also according to the prior art, because no medium was known which could usefully be incorporated in a chewing gum and could release such a small quantity of nicotine over a period as long as 10 minutes.

A chewing gum which satisfies the requirements of the prior art is described in Italian patent No. 1,044,563.

This patent describes the production of chewing gum including a cation-exchange resin which is dispersed finely in the gum base and to which predetermined quantities of from 1 to 5 mg of nicotine are bound. Although, on the one hand, such chewing gum achieves the predetermined object of releasing the nicotine slowly, on the other hand, it has the disadvantage that it is organoleptically less pleasant precisely because of the presence of the cation-exchange resin which gives the gum a particularly unpleasant taste.

Italian patent No. 1,045,528 describes chewing gum including no less than 40% by weight of a gum base in which the nicotine is dispersed in the form of a free base or a pharmacologically-acceptable addition salt of nicotine, or even as a complex including an absorbent substance which binds nicotine or a salt thereof. In this case, the chewing gum also has the desired advantage that it releases the nicotine slowly but, because of the high percentage of its gum base content, it has the disadvantage that it does not afford soft or linear chewing. The term linear chewing is intended to define a characteristic of the consistency of the chewing gum as a result of which the effort required to chew it is constant or almost constant over a period of time. It is well known that a gum base is generally a fairly stiff, solid substance which must be used in quite small percentages, generally no greater than 25% of the finished product by weight, so that it can be softened or plasticised by the sugary matrix and, in particular, by the flavouring ingredients of the chewing gum.

The otherwise recognised effectiveness of the nicotine gums of the prior art may be frustrated by their mainly organoleptic disadvantages which often constitute a psychological alibi or justification for the smoker's lack of will to persevere in his attempt to give up smoking.

The main object of the present invention is to provide a chewing gum which includes nicotine as a smoke substitute and which has characteristics such that it overcomes the problems mentioned above with reference to the prior art, whilst being of real help to a smoker who intends to give up smoking.

This object and others which will become clear from the description which follows are achieved by a chewing gum formed into 3g strips, characterised in that each strip includes no more than 25% by weight of a gum base and no more than 0.4 mg of nicotine or a salt thereof dispersed in the gum base without the addition of resin.

Whilst, on the one hand, the smaller quantity of nicotine assimilated during the chewing of a strip of chewing gum according to the invention has shown a complete lack of side-effects of the type described with reference to the prior-art nicotine chewing gums, even when many strips of chewing gum according to the invention were chewed daily, on the other hand, it was found, surprisingly, that the smokers' response, meaning the levels of nicotine retention in the blood and the saliva of subjects selected for the tests, was very similar in intensity and duration to that due to cigarette smoking.

The gum of the invention was therefore found to be considerably more effective than gums of the prior art, which was completely unexpected in view of the palatability and taste of the gum.

The characteristics and advantages of the invention will become clearer from the following description given with reference to the appended drawings, in which:

Figure 1 shows a curve typical of nicotinaemia due to cigarette smoking,

Figures 2 and 3 are graphs relating to the nicotinaemia levels reached after the administration of one strip of chewing gum of the prior art and four strips of chewing gum according to the invention, respectively,

Figure 4 shows a graph of the nicotine levels in the saliva during and after the chewing of a strip of chewing gum according to the invention.

Figures 5 and 6 show the mass spectra of nicotine and of nicotine marked with deuterium, respectively.

Figure 7 shows a calibration line for plasma.

3g strips of chewing gum according to the invention were prepared.
Each strip had the following composition:

|                                    | % by weight       |
| ---------------------------------- | ----------------- |
| gum base                           | 25.0%             |
| glucose syrup                      | 18.0%             |
| sucrose                            | 55.5%             |
| glycerol                           | 0.8%              |
| natural flavouring (spearmint oil) | 0.7%              |
| nicotine                           | 14.2 mg per 100 g |

The biological availability of the nicotine in a 3g strip of chewing gum according to the invention was evaluated by comparison with that in cigarette smoke and in a 3g strip of a prior-art nicotine gum sold under the name of NICORETTE and including 60% by weight of a gum gase and 2 mg of nicotine dispersed in the base.

EXPERIMENTAL TESTS

a) Nicotine levels in saliva

A strip of chewing gum according to the invention containing 0.4 mg of nicotine was chewed by a volunteer who had abstained from smoking for 10 hours. The gum was chewed for 20 minutes.
Saliva samples were taken at the following times during chewing: 5, 10 and 20 minutes. Samples were also taken 10 and 20 minutes after chewing (30 and 40 minutes after chewing started, respectively).

b) The kinetics of the nicotine after four pieces of gum according to the invention had been chewed.

Kinetics tests were carried out on a volunteer in order to follow the progress of his nicotine retention after four pieces of chewing gum with a total nicotine content of 1.6 mg had been administered. It was elected to use four strips of chewing gum in order to achieve nicotinaemia levels high enough to enable measurement and a direct comparison with NICORETTE (2 mg of nicotine).
The volunteer was a non-smoker and chewed the chewing gum for 10 minutes. Samples were taken at the start and 5, 10 and 20 minutes after chewing started.

c) Nicotine retention levels after the administration of one strip of NICORETTE

Kinetics tests were carried out on a volunteer in order to follow the progress of nicotine retention after a single strip of NICORETTE (2 mg of nicotine) had been administered. The volunteer was a smoker. The experiment was carried out after 10 hours' abstinence from smoking.
The gum was chewed for 20 minutes and samples were taken at the start and after 10, 20, 35, 90 and 150 minutes.

# Characteristics of the subjects

| | |
|---|---|
| age | 20-28 years |
| sex | 2 male smokers and |
| | 1 female non-smoker |
| weight | 50-70 Kg |
| No. of cigarettes | |
| habitually smoked | 15-20 of the following |
| | brands:  Lucky Strike, |
| | MS |

The reagents used were nicotine and 98% deuterated lithium aluminium hydride from Janssen Chimica, 2304 Beerse, Belgium; cotinine from Sigma (PO Box 14508, St. Louis, MO, U.S.A.). The solvents, were D-6100 from Merck, Darmstadt, F.R. of Germany.

Instrumentation

A VG TS-250 mass spectrometer with an HP 5890 gas chromatograph was used. The ionisation was effected by electron bombardment.

Synthesis of denatured nicotine

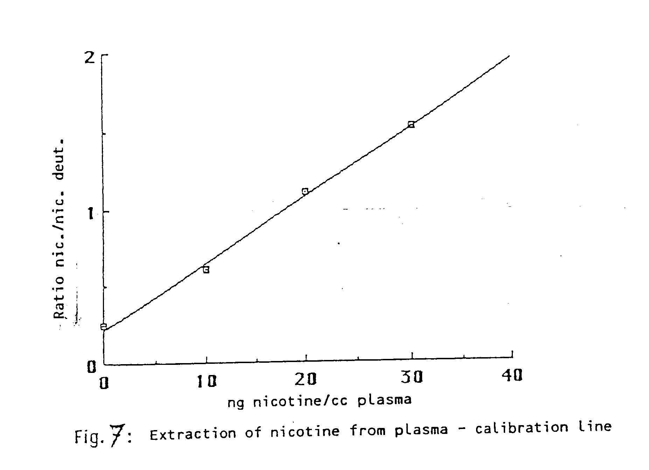

Nicotine marked with deuterium was prepared as an internal standard and was synthesised by us by the method of Duffield, Budzikiewics and Djerassi (1965). This method consists of the reduction of cotinine to nicotine-5,5-d2 by deuterated lithium aluminium hydride. Figure 5 shows the mass spectrum of nicotine and Figure 6 shows that of nicotine marked at position -5,5-d2.

The mass-to-charge values ($m^+/z$) are shown on the abscissae and their relative intensities are shown on the ordinates as percentages of the most abundant ions.

The extraction and measurement of the nicotine from plasma and saliva

The analytical method of Feyerabend and Russel (1978) was used to extract the nicotine from both the plasma and the saliva.

It should be stressed that the nicotine extracted was measured by a method which can achieve the sensitivity and specificity necessary to evaluate even small traces of nicotine in the plasma. As stated below, this method is based on the use of gas chromatography-mass spectrometry.

NaOH (2 ml, 5N) was added to a 1 ml sample (plasma or saliva) after the addition of the internal standard, and the mixture was extracted with ethyl ether (1 ml) and stirred in a vortex for two periods each of 2 minutes. HCl (1 ml, 1N) was added to the supernatant liquid which was then stirred in a vortex for a further 2 minutes. After the organic phase had been removed, 0.5 ml of NaOH (5 N) was added to the residue and the mixture extracted with n-hexane (0.5 ml) and stirred in a vortex for 2 minutes.

The extract was concentrated gently to about 50 µl under a flow of nitrogen. The product was ready for instrumental analysis by gas chromatography-mass spectrometry.

The quantitive determination was effected with the use of calibration lines obtained by the recovery of known quantities of nicotine from saliva or plasma matrices from non-smokers. Figure 7 shows the calibration line for plasma.

The gas chromatography-mass spectrometry was carried out under the following conditions:

| | |
|---|---|
| column | WCOT Cp WAX 57 CB |
| | length: 11 m |
| | int. diameter: 0.22 mm |
| pressure | 30 kPa |
| injector | On column |

| program | 60°C for 1 minute - 240°C |
| ionisation potential | 20 eV |
| specific ions | nicotine m$^+$/z 162 |
| | nicotine d2 m$^+$/z 164 |

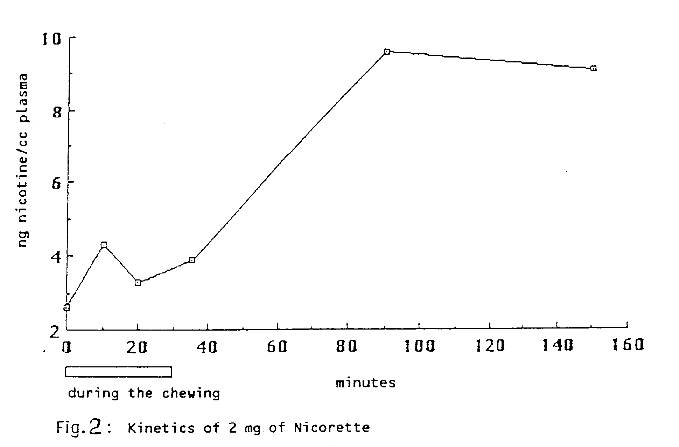

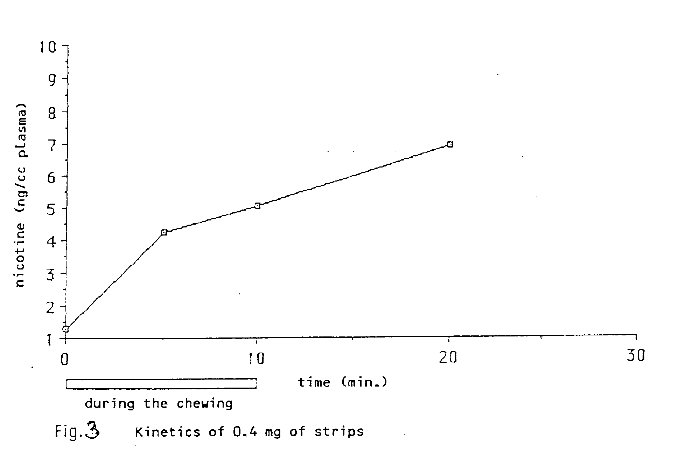

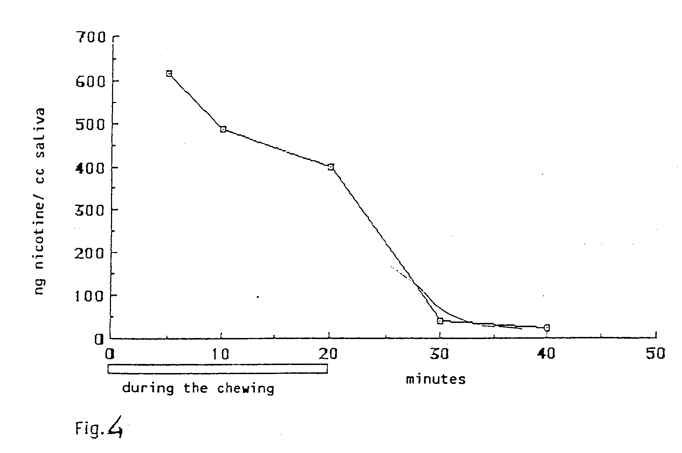

Figures 2 and 3 show respectively the nicotine retention levels obtained after the administration of a single strip of NICORETTE chewing gum (2 mg of nicotine) and of four pieces of chewing gum each with 0.4 mg of nicotine.

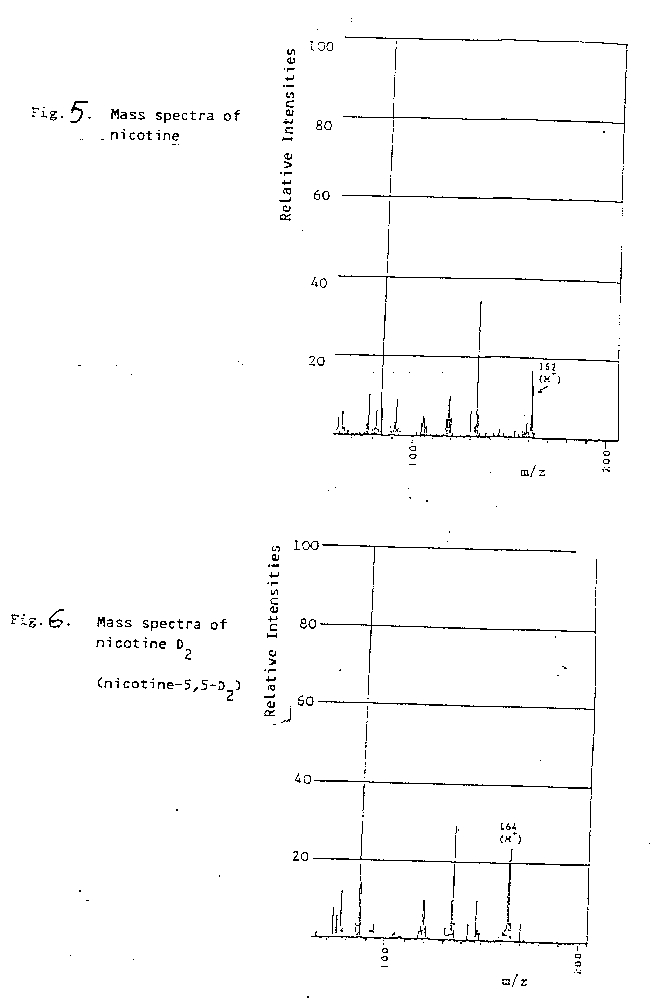

Figure 4 gives the nicotine levels in the saliva during and after the chewing of a strip of chewing gum with 0.4 mg.

The tests described above enabled the following conclusions to be drawn.

a) The nicotine levels in the saliva during and after the chewing of a 0.4 mg strip of gum indicate that the nicotine is released quickly during chewing. The nicotine levels in the saliva decrease sharply as soon as chewing stops.

b) The levels of nicotine in the blood during the chewing of four pieces of gum rise rapidly and remain fairly constant throughout the measurement period. The levels reached are comparable with those reached with NICORETTE (2 mg) but the maximum levels are reached more quickly.

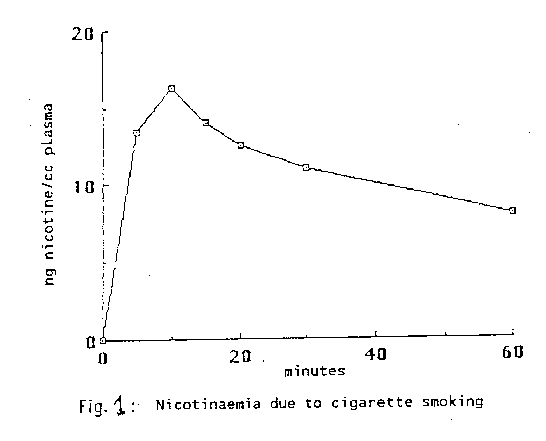

c) A comparison of the nicotine retention levels reached after gum according to the invention has been chewed and after cigarettes have been smoked (Figure 1) shows that, except for the very first minutes, when cigarette smoke produces the highest values, the curves of the levels are quite comparable. Comparable levels are reached with Nicorette 2mg but absorption is substantially quicker with the chewing gum of the invention.

## Claims

1. Chewing gum which is a substitute for tobacco smoke, formed into 3 g strips, characterised in that each strip includes no more than 25% of a gum base and no more than 0.4 mg of nicotine dispersed in the gum base.

## Patentansprüche

1. Kaugummi zum Ersatz für Tabakrauch, in Streifen zu 3 g, dadurch gekennzeichnet, daß jeder Streifen nicht mehr als 25 % einer Gummibasis und nicht mehr als 0,4 mg von in der Gummibasis verteiltem Nikotin enthält.

## Revendications

1. Gomme à mâcher qui est un succédané de la fumée de tabac, mise sous forme de tablettes de 3 g, caractérisée en ce que chaque tablette contient pas plus de 25 % d'une base de gomme et pas plus de 0,4 mg de nicotine dispersée dans la base de gomme.

Fig. 1 : Nicotinaemia due to cigarette smoking

Fig.2 : Kinetics of 2 mg of Nicorette

Fig.3    Kinetics of 0.4 mg of strips

Fig.4

Fig. 5. Mass spectra of nicotine

Fig. 6. Mass spectra of nicotine $D_2$

(nicotine-5,5-$D_2$)

Fig. 7: Extraction of nicotine from plasma - calibration line